# EUROPEAN PATENT APPLICATION

(11) **EP 2 887 421 A1**
(43) Date of publication of application: **24.06.2015**
(21) Application number: 13829634.8
(22) Date of filing: 15.07.2013
(51) Int. Cl.: H01M 2/04, H01M 2/12

(54) **LEAD-ACID BATTERY COVER WITH LARGE BACKFLOW SPACE EXHAUST STRUCTURE**

(30) Priority: 14.08.2012 CN 201220399613 U
(71) Applicant: Camel Group Huazhong Branch Co. Ltd., Hubei 441705 (CN)
(72) Inventor: LIU, Shizhong, Xiangfan Hubei 441705 (CN); WANG, Tao, Xiangfan Hubei 441705 (CN); LIU, Juan, Xiangfan Hubei 441705 (CN); XIAO, Juntao, Xiangfan Hubei 441705 (CN); ZHONG, Rurong, Xiangfan Hubei 441705 (CN)
(74) Representative: Zeuner Summerer Stütz
(86) International application number: PCT/CN2013/079355
(87) International publication number: WO 2014/026520

(57) **Abstract**

A lead-acid battery cover with a large backflow space exhaust structure is composed of a large cover and an exhaust cover, butt joint surfaces of the large cover and the exhaust cover are in heat seal, and cells are formed by the large cover and the exhaust cover corresponding to cell units of a battery; a main exhaust backflow hole and an auxiliary exhaust backflow hole are arranged in each cell, the distance between the main exhaust backflow hole and the auxiliary exhaust backflow hole is 1 to 3 times the thickness of a labyrinth barricade, and the main exhaust backflow hole and the auxiliary exhaust backflow hole are positioned at a starting end of a passage close to a terminal part in each cell; and a main barricade protrudes from the position of the main exhaust backflow hole and the auxiliary exhaust backflow hole to a side far from the terminal, and each cell is separated into an inner passage and an outer passage. The battery cover is characterized by large backflow space design, unobstructed air exhaust and quick acid liquid backflow, and has strong ability to exhaust and backflow.

## Description

### FIELD OF THE INVENTION

The invention relates to the technical field of storage battery, and especially to a storage battery parts on vehicle, and more particularly to a lead-acid battery cover with large backflow space.

### BACKGROUND OF THE INVENTION

A Lead-acid battery generally is composed of multiple single cells. Each single cell is filled with sulfuric acid electrolyte. The battery is required to have an unobstructed air exhaust and a quick acid liquid backflow in the course of using. Thus, a exhaust hole and a backflow hole are disposed on the battery cover and the structure, such as a labyrinth and an acid resisting plate, is arranged around the battery cover for reducing the loss of electrolyte. In the previous design, the arrangement of the acid filling hole 3, the exhaust hole 1, the backflow hole 3 and the barricade is unreasonable, which usually occupies a large space or has a narrow passage 2, and thereby resulting in an obstructed air exhaust. Accordingly, it is desired to design a reasonable structure, in which several holes and barricades are arranged reasonably to provide an unobstructed passage for the backflow of the acid fluid.

### SUMMARY OF THE INVENTION

In view of the above-described problems, it is one objective of the invention to provide a lead-acid battery cover with a large backflow space design, unobstructed air exhaust and quick acid liquid backflow.

To achieve the above objectives, there is provided a lead-acid battery cover with a large backflow space exhaust structure being composed of a large cover and an exhaust cover, butt joint surfaces of the large cover and the exhaust cover are in heat seal, and cells are formed by the large cover and the exhaust cover corresponding to cell units of a battery; a main exhaust backflow hole and an auxiliary exhaust backflow hole are arranged in each cell, the distance between the main exhaust backflow hole and the auxiliary exhaust backflow hole is 1 to 3 times the thickness of a labyrinth barricade , and the main exhaust backflow hole and the auxiliary exhaust backflow hole are positioned at a starting end of a passage close to a terminal part in each cell; and a main barricade protrudes from the position of the main exhaust backflow hole and the auxiliary exhaust backflow hole to a side far from the terminal, and each cell is separated into an inner passage and an outer passage. The battery cover is characterized by large backflow space design, unobstructed air exhaust and quick acid liquid backflow, and has strong ability to exhaust and backflow.

In a class of this embodiment, bottom surfaces of the inner passage and the outer passage are inclined planes for facilitating the backflow of acid fluid.

In a class of this embodiment, the length-width ratio of the inner passage is greater than 1:1.

In a class of this embodiment, the diameter of the auxiliary exhaust backflow hole is between 2 and 5mm.

In a class of this embodiment, the distance between the main exhaust backflow hole and the auxiliary exhaust backflow hole is 1 time the thickness of the labyrinth barricade, and the main exhaust backflow hole and the auxiliary exhaust backflow hole are positioned at edge cells which are located on both sides of each cell.

The invention makes improvement against the unreasonable defect of the labyrinth design of the existing battery. The main exhaust backflow hole and the auxiliary exhaust backflow hole are used in the same cell. The distance between the main exhaust backflow hole and the auxiliary exhaust backflow hole is 1∼3 times the thickness of the labyrinth barricade. The main exhaust backflow hole and the auxiliary exhaust backflow hole are positioned at a starting end of a passage close to a terminal part in each cell. Furthermore, a main barricade protrudes from the position of the main exhaust backflow hole and the auxiliary exhaust backflow hole to a side far from the terminal and each cell is separated into an inner passage and an outer passage. The bottom surfaces of the inner passage and the outer passage are inclined planes for facilitating the backflow of acid fluid. With this modification, the exhaust backflow hole and the auxiliary exhaust backflow hole are arranged together compactly and both of them are located at the starting end of the passage. The inner passage and the outer passage form a large backflow space. Because the bottom surface is an inclined plane, there is a broad passage rather than a narrow passage after the gas comes from two exhaust holes, and no structure, such as a hole, can prevent the gas, which provides enough space for the acid fluid and facilitates the acid fluid to backflow to the main exhaust backflow hole and the auxiliary exhaust backflow hole. The two compact holes enable the battery to exhaust without acid fluid and do not enable the backflow to affect the gas discharging during the process of charging, and thereby improving the safety of the battery. The two compact holes enables the battery to exhaust with no acid mingled and to reflux with outgassing not affected during charging, thus the safety of the battery is improved. The battery cover of the invention is characterized by unobstructed air exhaust and quick acid liquid backflow, and has strong ability to exhaust and backflow.

### BRIEF DESCRIPTION OF THE DRAWINGS

FIG. 1 is a structural diagram of a prior lead-acid battery cover.
FIG. 2 is a structural diagram of the lead-acid battery cover according to the present invention.

### DETAILED DESCRIPTION OF THE EMBODIMENTS

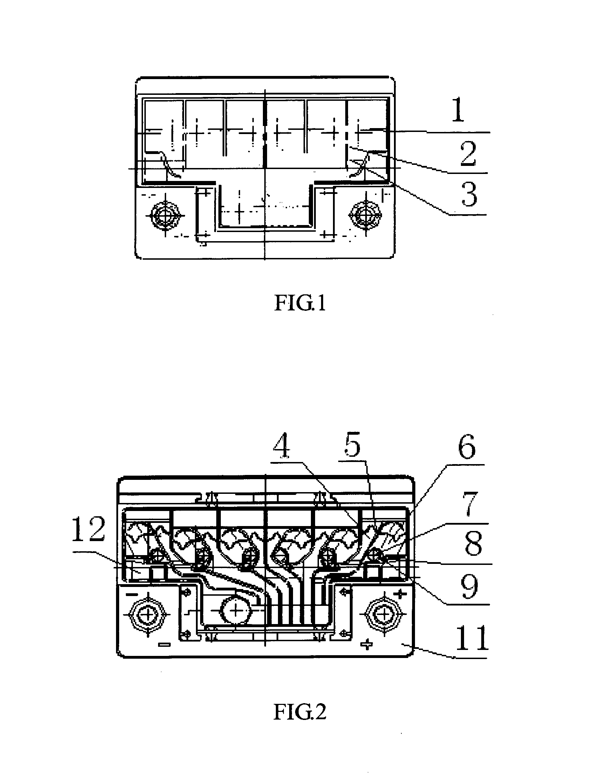

As shown in FIG. 2, a lead-acid battery cover with a large backflow space exhaust structure is composed of a large cover 11 and an exhaust cover 12. Butt joint surfaces of the large cover 11 and the exhaust cover 12 are in heat seal. Four intermediate cells and two edge cells are formed by the large cover 11 and the exhaust cover 12 corresponding to cell units of a battery. A main exhaust backflow hole 7 and an auxiliary exhaust backflow hole 9 are arranged in the intermediate cells and the edge cells. The main exhaust backflow hole 7 is a big circular exhaust backflow hole and the auxiliary exhaust backflow hole 9 is a small circular exhaust backflow hole. A main barricade 5 protrudes from the position of the main exhaust backflow hole 7 and the auxiliary exhaust backflow hole 9 to a side far from the terminal and each cell is separated into an inner passage 4 and an outer passage 6. The bottom surfaces of the inner passage 4 and the outer passage 6 are inclined planes for facilitating the backflow of acid fluid. The main exhaust backflow hole 7 is located at a starting end of the inner passage 4 and the outer passage 6. The auxiliary exhaust backflow hole 9 is located on the inner passage 4 and the outer passage 6. The distance between the main exhaust backflow hole and the auxiliary exhaust backflow hole in the intermediate cells is 3 times the thickness of a labyrinth barricade. The passage 8 between the main exhaust backflow hole and the auxiliary exhaust backflow hole is very short. The distance of the passage 8 is 1 time the thickness of a labyrinth barricade. The length-width ratio of the inner passage 4 is greater than 1:1 (providing the effects, advantages, etc.). The angle between the line between the main exhaust backflow hole 7 and the auxiliary exhaust backflow hole 9 and the center line of the battery cover is ∼ °(providing the effects, advantages, etc.). The diameter of the auxiliary exhaust backflow hole 9 is between 2 and 5mm (providing the effects, advantages, etc.). The two compact holes enable the battery to exhaust without acid fluid and do not enable the backflow to affect the gas discharging during the process of charging, and thereby improving the safety of the battery.

## Claims

1. A lead-acid battery cover with a large backflow space exhaust structure, being composed of a large cover and an exhaust cover, butt joint surfaces of the large cover and the exhaust cover are in heat seal, and cells are formed by the large cover and the exhaust cover corresponding to cell units of a battery, **characterized in that** a main exhaust backflow hole and an auxiliary exhaust backflow hole are arranged in each cell, the distance between the main exhaust backflow hole and the auxiliary exhaust backflow hole is 1 to 3 times the thickness of a labyrinth barricade, and the main exhaust backflow hole and the auxiliary exhaust backflow hole are positioned at a starting end of a passage close to a terminal part in each cell; and a main barricade protrudes from the position of the main exhaust backflow hole and the auxiliary exhaust backflow hole to a side far from the terminal, and each cell is separated into an inner passage and an outer passage.

2. The lead-acid battery cover according to claim 1, **characterized in that** bottom surfaces of the inner passage and the outer passage are inclined planes for facilitating the backflow of acid fluid.

3. The lead-acid battery cover according to claim 1, **characterized in that** the length-width ratio of the inner passage is greater than 1:1.

4. The lead-acid battery cover according to claim 1, **characterized in that** the diameter of the auxiliary exhaust backflow hole is between 2 and 5mm.

5. The lead-acid battery cover according to claim 1, **characterized in that** the distance between the main exhaust backflow hole and the auxiliary exhaust backflow hole is 1 time the thickness of the labyrinth barricade, and the main exhaust backflow hole and the auxiliary exhaust backflow hole are positioned at edge cells which are located on both sides of each cell.
